# EUROPÄISCHE PATENTSCHRIFT

(11) **EP 0 330 871 B1**
(45) Veröffentlichungstag und Bekanntmachung des Hinweises auf die Patenterteilung: **28.04.1993**
(21) Anmeldenummer: 89102097.6
(22) Anmeldetag: 08.02.1989
(51) Int. Cl.: F16L 37/08

(54) **Lösbare Steckverbindung für halbstarre Rohre**
Releasable plug coupling for a semi-rigid pipe
Raccord détachable à fiche pour tuyau semi-rigide

(30) Priorität: 29.02.1988 DE 3806404
(43) Veröffentlichungstag der Anmeldung: 06.09.1989
(73) Patentinhaber: A. Raymond & Cie, 38028 Grenoble (FR)
(72) Erfinder: Moretti, Erminio, F-38000 Grenoble (FR)
(74) Vertreter: Kirchgaesser, Johannes, Dipl.-Ing.

(56) Entgegenhaltungen:
- FR-A- 1 474 023
- FR-A- 2 591 309
- GB-A- 1 024 537
- GB-A- 1 555 640

## Beschreibung

Die Erfindung geht aus von einer Steckverbindung nach dem Oberbegriff des Anspruchs 1, welche z.B durch die DE-C-27 50 547 bekannt ist. Bei dieser Steckverbindung ist der Haltering mittels einer Hülse fest gegen die zweite Schulter des Gehäuseteils gespannt, während der Anschlagring verschieblich zwischen der zweiten und der dritten Schulter angeordnet ist. Hierbei wird es als Nachteil empfunden, daß der Anschlagring versehentlich in falscher Richtung, d.h. mit dem Konus zum Dichtring weisend eingesetzt werden kann, was die Funktionstüchtigkeit der Steckverbindung stark beeinträchtigen wurde. Außerdem muß die Hülse nach dem Einbau noch durch Zusammenbiegen des vorderen Gehäuserandes festgelegt werden, wozu das Gehäuse üblicherweise aus Metall hergestellt sein muß.

Aufgabe der Erfindung ist es, die vorgenannte Steckverbindung und ihre einzelnen Verbindungsteile so zu gestalten, daß mit Ausnahme des Halterings alle Teile aus Kunststoff hergestellt sein können und daß ferner der Zusammenbau vereinfacht und dabei sichergestellt wird, daß alle Verbindungsteile in richtiger funktionslage in das Gehäuse eingeführt werden, so daß Fehlmontagen praktisch ausgeschlossen sind.

Zur Lösung dieser Aufgaben werden die im Anspruch 1 angegebenen kennzeichnenden Merkmale vorgeschlagen, wobei die Unteransprüche förderliche Zusatzmerkmale enthalten, deren Vorteile aus der nachfolgenden Beschreibung des in der Zeichnung dargestellten Ausführungsbeispiels hervorgehen. Es zeigt
- Fig.1: einen Schnitt durch das Steckverbindungsgehäuse mit in der oberen Hälfte eingezeichneten Verbindungsteilen,
- Fig.2: einen Schnitt durch das Steckverbindungsgehäuse mit eingesetztem Rohrstück und
- Fig.3 bis Fig.6: die Montagefolge beim Einsetzen der Verbindungsteile in das Gehäuse.

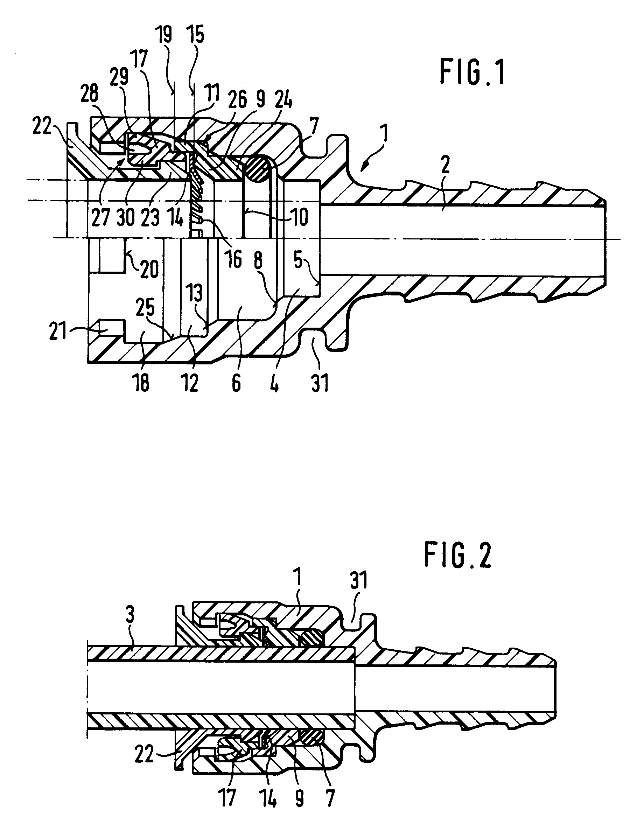

Die in den Figuren dargestellte Steckverbindung besteht aus einem Gehäuseteil 1 mit einem Durchgangsloch 2 für das durchströhmende Medium und mehreren stufenweise vergrößerten Hohlräumen zur Aufnahme eines halbstarren Rohres wie eines Benzinleitungsrohres aus Kunststoff sowie der nachfolgend näher beschriebenen Verbindungsteile.
Der erste erweiterte Hohlraum 4 entspricht in seinem Innendurchmesseer dem Außendurchmesser des Rohres 3, wobei die Schulter 5 als Anschlag für das Rohr 3 dient und dessen Eindringtiefe begrenzt. Der zweite erweiterte Hohlraum 6 nimmt den Dichtring 7 auf, dessen Innendurchmesser etwas kleiner ist als der Außendurchmesser des Rohres 3. Die axiale Beweglichkeit des Dichtringes 7 ist in Einsteckrichtung begrenzt durch die Schulter 8 des Hohlraumes 6 und nach der anderen Seite durch die Stirnfläche 10 eines Anschlagringes 9, dessen Innendurchmesser ebenfalss dem Außendurchmesser des Rohres 3 angepaßt ist und dessen Außendurchmesser dem Innendurchmesser des zweiten Hohlraumes 6 entspricht. Dieser Anschlagring 9 ist mit einem Flanschring 11 versehen, welcher in den dritten erweiterten Hohlraum 12 hineinragt und an der Schulter 13 dieses Hohlraumes 12 fest anliegt. In dem nach außen offenen Flanschring 11 des Anschlagrings 9 ist ein Haltering 14 eingebettet, dessen Außenbereich an der Innenschulter 15 des Anschlagrings 9 anliegt und der schräg nach innen abstehende Federlappen 16 aufweist, die in ihrer Sperrlage (vgl.Fig.2) einen flachen, mit seiner Spitze in Einsteckrichtung zeigenden Kegelstumpf bilden.

Der Außenbereich des Halteringes 14 wird mit etwas Abstand zur Innenschulter 15 durch einen Stützring 17 gehalten, welcher seinerseits in einem nochmals erweiterten Hohlraum 18 eingebettet und zwischen der Stirnfläche 19 des Flanschrings 11 und den nach innen abgesetzten Schultern 20 von vier am Eingang des Gehäuseteils 1 angeformten und über den Umfang gleichmäßig verteilten hakenförmigen Vorsprüngen 21 eingesetzt ist. Der Innendurchmesser der Vorsprünge 21 ist hierbei gleich dem Innendurchmesser des Hohlraums 12, damit der Anschlagring 9 problemlos bis zum Hohlraum durchgeführt werden kann.

In diesem Stüztring 17 ist noch ein Demontagering 22 relativ zum Gehäuseteil 1 axialverschieblich geführt, dessen etwas verbreiterter Kopf 23 konisch zugespitzt ist und bis kurz vor den Haltering 14 reicht, so daß beim Eindrücken des Demontageringes 22 in Einsteckrichtung die Federlappen 16 des Halteringes 14 in die Spreizlage aufgefächert werden und das Rohr 3 aus der Steckverbindung herausgezogen werden kann.

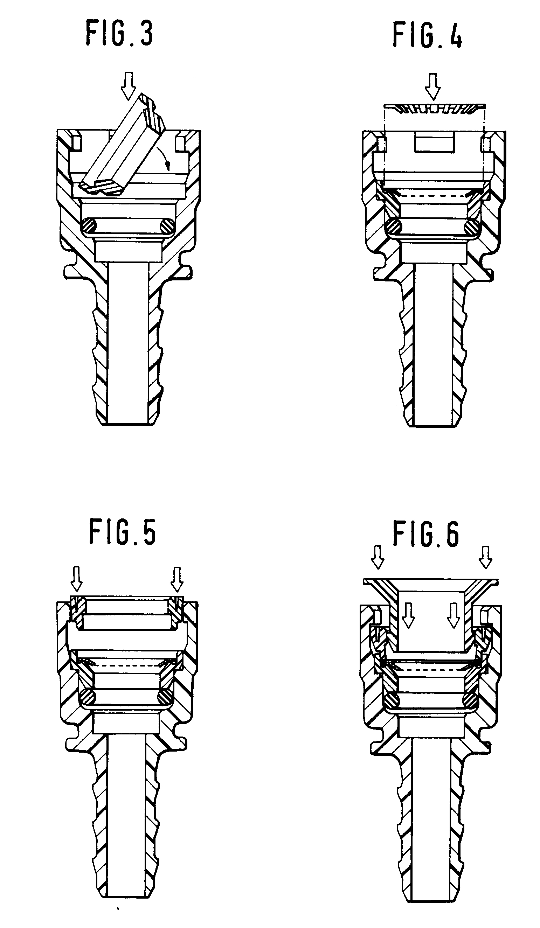

Um bei der Montage der Steckverbindung sicher zu sein, daß der Anschlagring 9 mit dem im Außendurchmesser kleineren Vorderteil 24 immer in Richtung auf den Dichtring 7 eingeführt wird, ist der vierte erweiterte Hohlraum 18 so gestaltet, daß die Innenwand 25 in Einsteckrichtung im hinteren Bereich konisch zusammenläuft und daß ferner der Anschlagring 9 an der einsteckseitigen Flanschkante 26 ebenfalls konisch zusammenläuft. Außerdem ist das zum Dichtring 7 weisende Vorderteil 24 des Anschlagringes9 so gestaltet, daß es ein größeres Gewicht hat als der angeformte Flanschring 11. Dadurch hat der Anschlagring 9 bei der Montage gemäß Fig.3 immer das Bestreben, mit dem schwereren Vorderteil 24 vorweg in die stabile Lage zu fallen.

Um den Stützring 17 für die Montage flexibler zu machen, ist an der zu den Vorsprüngen 21 gerichteten Stirnseite 27 eine konzentrisch in den Ring 17 hineinragende, den Querschnitt schwächende Aussparung 28 vorgesehen, so daß hierdurch ein elastischer Außenring 29 und ein ebenfalls elastischer Innenring 30 gebildet wird. Der Vorteil dieser Maßnahme ist aus den Fig.5 und 6 zu erkennen. Beim Einführen des Stützringes 17 gemäß Fig.5 wird der Außenring 29 durch die Haken bzw. Vorsprünge 21 elastisch zusammengedrückt, bis der Stützring 17 im Hohlraum 18 eingetaucht ist und an der Stirnfläche 19 des Flanschringes 11 anliegt. Dabei federt der Außenring 29 wieder in seine ursprüngliche Lage zurück und rastet an den Schultern 20 der Vorsprünge 21 ein.

Beim weiteren Einführen des Demontagerings 22 drückt der vordere konische Kopf 23 den Innenring 30, wie in Fig. 6 dargestellt - leicht auseinander. Sobald der Kopf 23 den Engpaß überwunden und seine vorbestimmte Lage dicht vor dem Haltering 14 erreicht hat, federt der Innenring 30 wieder zurück, so daß der Demontagering 22 axial verschieblich geführt und gleichzeitig gegen ein Zurückweichen gesichert ist.

Durch die aufgezeigten Maßnahmem ist es ohne weiteres möglich, die Steckverbindung von Hand zusammenzubauen. Eine Fehlmonrage ist dabei ausgeschlossen. Eine umlaufende Rille 31 am Ende des Gehäuseteils 1 bietethierbei noch die Möglichkeit, die fertigmontierte Steckverbindung mittels einer nicht dargestellten Gabel oder Zange einzuspannen und dann einen Schlauch einzuführen, die Haltekraft zu prüfen und eine Funktionskontrolle durch Betätigung des Demontageringes durchzuführen.

## Patentansprüche

1. Lösbare Steckverbindung für halbstarre Rohre, bestehend aus einem Gehäuseteil mit einem Durchgangsloch und mehreren stufenweise vergrößerten Hohlräumen zur Aufnahme der Verbindungsteile, wobei die Schulter der ersten Stufe als Anschlag für das Rohr und die Schulter der zweiten Stufe als Anlage für den Dichtring dient,dem in Einsteckrichtung ein elastisch auffederbarer Haltering vorgelagert ist der von einem Stützring gehalten wird und dessen nach innen abstehende Federlappen in ihrer Sperrlage einen flachen, mit seiner Spitze in Einsteckrichtung weisenden Kegelstumpf bilden, wobei zwischen dem Haltering und dem Dichtring ein Anschlagring angeordnet ist, dessen den Federlappen zugewandte Seite als Konus ausgebildet ist, und wobei in Einsteckrichtung vor dem Haltering ein relativ zum Gehäuseteil axial verschieblicher Demontagering angeordnet ist, dessen konisch zugespitzter Kopf beim Eindrücken des Demontagerings in das Gehäuseteil die Federlappen des Halterings in die Spreizlage auffächert,
**dadurch gekennzeichnet,**
daß der Anschlagring (9) einen Flanschring aufweist und an der dritten Schulter (13) des Hohlraumes (12) mit diesem Flanschring (11) anliegt, welcher gleichzeitig als Anlage für den Haltering (14) dient, und daß letzterer durch einen solchen Stützring (17) gehalten wird, welcher in einem nochmals erweiterten Hohlraum (18) des Gehäuseteils (1) eingebettet und zwischen der Stirnfläche (19) des Flanschringes (11) und einer vierten, nach innen abgesetzten Schulter (20) elastisch eingerastet ist.

2. Steckverbindung nach Anspruch 1, dadurch gekennzeichnet, daß die vierte, nach innen abgesetzte Schulter (20) durch vier im Eingang des Hohlraumes (18) am Gehäuseteil (1) angeformte hakenförmige Vorsprünge (21) gebildet ist, wobei der Innendurchmesser der Vorsprünge (21) gleich dem Innendurchmesser des Hohlraumes (12) vor der dritten Schulter (13) ist.

3. Steckverbindung nach Anspruch 1 oder 2, dadurch gekennzeichnet, daß die Innenwand (25) des nochmals erweiterten Hohlraums (18) in Einsteckrichtung im hinteren Bereich konisch zusammenläuft und der Anschlagring (9) an der einsteckseitigen flanschkante (26) ebenfalls konisch zusammenläuft.

4. Steckverbindung nach einem der Ansprüche 1 bis 3, dadurch gekennzeichnet, daß der Anschlagring (9) mit dem zum Dichtring (7) weisenden Vorderteil (24) ein größeres Gewicht hat als der nach außen angeformte Flanschring (11).

5. Steckverbindung nach Anspruch 1, dadurch gekennzeichnet, daß der Stützring (17) an seiner nach außen gerichteten Stirnseite (27) durch eine konzentrisch in den Ring (17) hineinragende Aussparung oder Rille (28) eine geschwächte, elastisch nachgiebige Zone aufweist.

## Claims

1. A releasable push-in connection for semi-rigid pipes comprising a housing portion having a through hole and a plurality of cavities which are increased in size in a step-wise manner, for receiving the connecting portions, wherein the shoulder of the first step serves as an abutment for the pipe and the shoulder of the second step serves as a support for the sealing ring, upstream of which in the direction of insertion is disposed a resiliently expansible holding ring which is held by a support ring and whose inwardly projecting spring tongues in their locking position form a shallow truncated cone which faces with its tip in the direction of insertion, wherein disposed between the holding ring and the sealing ring is an abutment ring whose side which is towards the spring tongues is in the form of a cone, and wherein arranged in front of the holding ring in the direction of insertion is a dismantling ring which is axially displaceable relative to the housing portion and whose conically converging head, when the dismantling ring is pressed into the housing portion, opens out the spring tongues of the holding ring into the spread position, characterised in that the abutment ring (9) has a flange ring and bears against the third shoulder (13) of the cavity (12) with said flange ring (11) which serves at the same time as a support for the holding ring (14) and that the latter is held by such a support ring (17) which is disposed in a further enlarged cavity (18) of the housing portion (1) and is resiliently engaged between the end face (19) of the flange ring (11) and a fourth inwardly stepped shoulder (20).

2. A push-in connection according to claim 1 characterised in that the fourth inwardly stepped shoulder (20) is formed by four hook-shaped projections (21) formed on the housing portion (1) in the entrance to the cavity (18), the inside dismeter of the projections (21) being equal to the inside diameter of the cavity (12) in front of the third shoulder (13).

3. A push-in connection according to claim 1 or claim 2 characterised in that the inside wall (25) of the further enlarged cavity (18) converges conically in the direction of insertion in the rearward region and the abutment ring (9) also converges conically at the flange edge (26) at the insertion side.

4. A push-in connection according to one of claims 1 to 3 characterised in that the abutment ring (9) with the front portion (24) which faces towards the sealing ring (7) is of greater weight than the flange ring (11) which is formed thereon in an outward direction.

5. A push-in connection according to claim 1 characterised in that at its outwardly directed end (27) the support ring (17) has a weakened, resiliently yielding zone by virtue of a groove or recess (28) which projects concentrically into the ring (17).

## Revendications

1. Raccord rapide débrochable pour le raccordement de canalisations semi-rigides, se composant d'une partie ertérieure femelle comportant un orifice de passage et de plusieurs cavités dont le diamètre augmente par paliers successifs destinées à recevoir les différents organes de raccordement, l'épaulement du premier gradin faisant en l'occurrence office de butée pour l'extrémité du tube et l'épaulement du deuxième gradin d'assise pour la bague d'étanchéité, devant laquelle se trouve placée, dans le sens de l'emmanchement, une bague de retenue capable de se déformer élastiquement, qui est maintenue en position par une bague d'appui, dont les languettes élastiques formant saillie vers l'intérieur forment, dans leur position d'arrêt un cône tronqué aplati dont la pointe est orientée dans le sens de l'emmanchement, avec, entre la bague de retenue et la bague d'étanchéité, une bague de butée, dont la partie faisant face aux languettes élastiques est réalisée suivant un tracé conique, et comportant, dans le sens de l'emmanchement, devant la bague de retenue, une bague de desaccouplement capable de coulisser dans le plan axial par rapport à la partie extérieure femelle, bague dont la tête se terminant en pointe suivant un tracé conique provoque, lorsque l'on exerce une pression sur la bague de desaccouplement dans la partie extérieure femelle, le déploiement en éventail des languettes élastiques de la bague de retenue, **se caractérisant par le fait** que la bague de butée (9) comporte une bague à collerette et vient en appui contre le troisième épaulement (13) de la cavité (12) par cette bague à collerette (11), qui fait en même temps office d'assise pour la bague de retenue (14), et par le fait que cette dernière est maintenue par une bague d'appui (17), qui vient s'insérer dans une cavité d'un diamètre encore supérieur (18) de la partie extérieure femelle (1) et s'encastrer par effet élastique entre la face antérieure (19) de la bague à collerette (11) et un quatrième épaulement (20) déporté vers l'intérieur.

2. Raccord rapide suivant la revendication 1, se caractérisant par le fait que le quatrième épaulement (20) déporté vers l'intérieur est constitué par quatre saillies recourbées en forme de crochet (21) réalisées solidaires par moulage de la partie extérieure femelle (1) au niveau de l'entrée de la cavité (18), le diamètre intérieur des saillies (21) étant en l'occurrence identique au diamètre intérieur de la cavité (12) en avant du troisième épaulement (13).

3. Raccord rapide suivant la revendication 1 ou 2, se caractérisant par le fait que la paroi intérieure (25) de la cavité d'un diamètre encore supérieur (18), se resserre, dans le sens de l'emmanchement, au niveau de sa partie postérieure, suivant un tracé conique, et que la bague de butée (9) se resserre également suivant un tracé conique au niveau du bord de la collerette (26) sur le côté emmanchement.

4. Raccord rapide suivant une des revendications 1 à 3, se caractérisant par le fait que la bague de butée (9) a, au niveau de sa partie antérieure (24) qui fait face à la bague d'étanchéité (7) un poids supérieur à celui de la bague à collerette (11) attenante orientée vers l'extérieur.

5. Raccord rapide suivant la revendication 1, se caractérisant par le fait que la bague d'appui (17) présente, au niveau de sa face avant orientée vers l'extérieur (27), par un évidement ou une gorge (28) pénétrant de façon concentrique à l'intérieur de la bague (17), une zone affaiblie capable de cèder élastiquement.
